# EUROPEAN PATENT APPLICATION

(11) **EP 4 811 717 A1**
(43) Date of publication of application: **23.09.2026**
(21) Application number: 25382250.6
(22) Date of filing: 18.03.2025
(51) Int. Cl.: H04L 9/08

(54) **A NON-TERRESTRIAL COMMUNICATION SYSTEM AND METHOD FOR SECURELY SYNCHRONIZING QUANTUM-SECURE CRYPTOGRAPHIC KEYS**

(71) Applicant: SATELIO IOT SERVICES, S.L., 08029 Barcelona (ES)
(72) Inventor: AGUILAR ROMERO, Sergio, 08041 Barcelona (ES); GUPTA, Shubham, 08024 Barcelona (ES); FERRÚS FERRÉ, Ramon, 08015 Barcelona (ES); FERRER RIERA, Josep, 08960 Sant Just Desvern (ES); GUADALUPI, Marco, 08018 Barcelona (ES); SANPERA IZOARD, Jaume, 08014 Barcelona (ES)
(74) Representative: Torner, Juncosa I Associats, SL

(57) **Abstract**

A non-terrestrial communication system and method for securely synchronizing quantum-secure cryptographic keys are provided. The system comprises a satellite comprising a SAT key operations module with a SAT key manager to manage and provide quantum-secure cryptographic keys; a first connection adapter co-located with an HSS; a CPE comprising a CPE key operations module with a CPE key manager to manage and provide quantum-secure cryptographic keys, a second connection adapter, and one radio terminal. The first adapter sends a key information request to the SAT key operations module, receives quantum-secure cryptographic key information from the SAT key operations module, loads a quantum-secure cryptographic key into the HSS, and sends a key identifier to the second connection adapter. The second adapter sends a key information request to the CPE key operations module, receives quantum-secure cryptographic key information from the CPE key operations module, and loads a quantum-secure cryptographic key into the radio terminal.

## Description

### TECHNICAL FIELD

The present invention generally relates to non-terrestrial communication systems and methods. More specifically, the invention relates to a non-terrestrial communication system and to a method for securely synchronizing quantum-secure cryptographic keys.

### BACKGROUND OF THE INVENTION

Security and cryptography are fundamental aspects of mobile communications networks. Traditional cryptographic methods rely on the computational complexity of mathematical functions, making current systems vulnerable to advances in computational power. In contrast, Quantum Key Distribution (QKD) is known as a secure method for generating cryptographic keys between two parties using principles of physical laws to ensure security.

In QKD systems, cryptographic keys are generated by transmitting quantum states, typically encoded as photons, over an optical link from a QKD transmitter to a QKD receiver. These quantum states are represented by properties such as polarization or phase, which are governed by the principles of quantum mechanics. During the transmission process, the transmitter encodes information onto the quantum states and the receiver performs a series of measurements to decode the transmitted information.

The laws of quantum mechanics ensure that any attempt by an eavesdropper to intercept or measure these quantum states disturbs them, introducing detectable anomalies, such as increased quantum bit error rates (QBER). By comparing a subset of their transmitted and received data, the transmitter and receiver can identify the presence of eavesdropping and discard any compromised states. The remaining error-free states are then processed to generate a secure cryptographic key, ensuring the integrity and confidentiality of their communication. This unique property of quantum mechanics makes QKD highly resistant to interception and tampering.

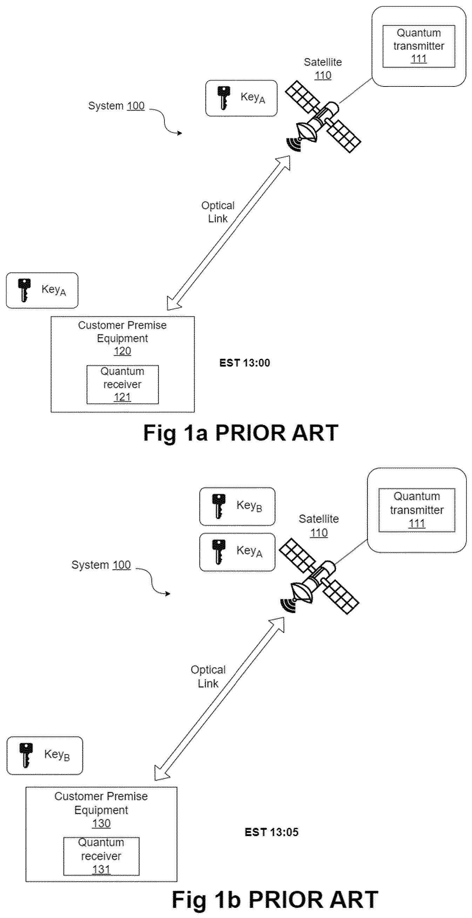

Figs. 1a and 1b illustrate an example of a sequential QKD process implemented using satellites and a Customer Premise Equipment (CPE). In Fig. 1a, at a first-time instance (EST 13:00), a satellite 110 equipped with a quantum transmitter 111 establishes an optical link with a CPE 120 that includes a quantum receiver 121. Through a QKD process, a shared cryptographic key (Key_A) is generated between the satellite 110 and the CPE 120. In Fig. 1b, at a subsequent time instance (EST 13:05), the same satellite 110 establishes a separate optical link with a second CPE 130, equipped with a quantum receiver 131, generating a second cryptographic key (Key_B). In these prior art systems illustrated, the QKD process occurs sequentially, with each key generation event requiring a dedicated optical link between a specific satellite and a CPE.

While the telecom industry has made strides in QKD technologies, its application to enhance 5G security services is still in early stages. Only a limited number of studies have been identified that addresses the integration of QKD with 5G systems. For instance, Arul et al. [1] disclose a security solution within the LTE framework that utilizes quantum principles for key generation, thereby improving resistance to potential threats and enhancing overall security.

Moreover, standards for Quantum Key Distribution Networks (QKDNs) have been established by ITU-T SG13 [2], and further standardization efforts are in progress with ITU-T FG-QIT4N [3]. Merging QKD capabilities into current 5G fronthaul networks is considered as a promising solution to address vulnerabilities in 5G networks, offering an ultra-secure mechanism for cryptographic key generation that ensures eavesdropping is detectable and key interception becomes virtually impossible.

The growing momentum in QKD standardization and research reflects the increasing interest in integrating quantum-secure keys into satellite-based 5G networks. Despite technological advancements, deploying QKD technologies to strengthen 5G security still faces challenges. Particularly, the efficient and secure distribution of QKD-generated keys from satellites to critical 5G components. For example, components such as the Home Subscriber Server (HSS), responsible for managing user authentication and subscription data stored within its Authentication Center (AuC), as well as radio terminals, including smartphones, tablets, and/or loT devices require secure mechanisms for key delivery. Overcoming these challenges is essential to ensure that 5G NTNs and future standard are resilient against emerging quantum-enabled threats, thereby supporting the secure evolution of global communication infrastructures.

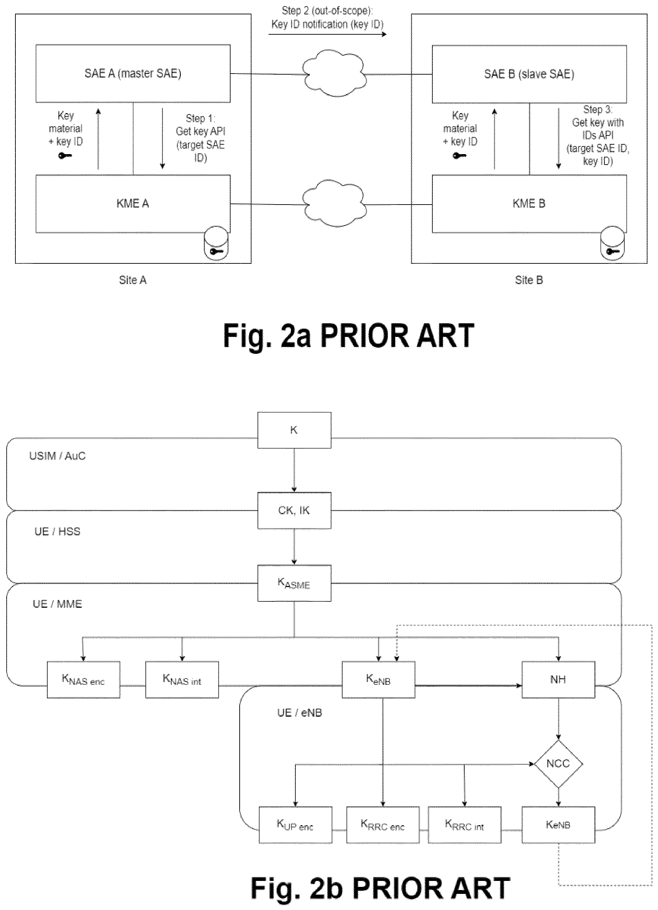

To address key distribution challenges in QKD networks, the European Telecommunications Standards Institute (ETSI) has proposed a REST-based key delivery API, designed to facilitate secure and efficient key exchange. This API employs a request-and-response mechanism between the Secure Application Entity (SAE) and the Key Management Entity (KME) [4], as illustrated in Fig. 2a.

In ETSI's approach, SAEs initiate key delivery requests to KMEs, which are responsible for distributing the keys. The API is designed for environments where SAEs and KMEs are located within the same secure site, thereby ensuring a secure connection. While KMEs leverage QKD technology for key generation and distribution, ETSI's specifications do not provide detailed descriptions of the key management procedures or the key relay protocols required for distributing keys across the broader QKD network.

Current 3GPP standard key hierarchy architectures, such as the system architecture illustrated in the Fig. 2b [5], are based on security mechanisms derived from conventional pre-shared keys. However, due to the lack of secure integration of QKD keys into mobile communication networks, these architectures remain vulnerable. The growing threat posed by future quantum computing capabilities, which may overcome the security classical cryptographic algorithms, could compromise the entire key hierarchy if the pre-shared key is exposed. Consequently, there is a critical need for improved methods and systems for the secure distribution, loading, and synchronization of quantum-secure keys. The implementation of a quantum-secure key hierarchy would mitigate the risks associated with quantum-enabled threats and enhance the overall resilience of the network.

The design of methods and network components, whether implemented onboard satellites or within ground-based infrastructure, for distributing quantum-secure cryptographic keys across elements of NTNs and securely loading them into critical 5G components such as HSSs or radio terminals are not explicitly disclosed in the prior art. Consequently, a key hierarchy architecture levering the security of these keys is not available. Furthermore, existing solutions do not address the implementation of mutual authentication mechanisms between key management entities and the network component requesting the keys during the QKD key delivery procedures.

### References:

[1] ETSI GS QKD 014, version, 1.1.1 Quantum Key Distribution (QKD); Protocol and data format of REST-based key delivery API, February, 2019
[2] ETSI RFC 8446, "The Transport Layer Security (TLS) Protocol Version 1.3", https://www.rfc-editor.org/info/rfc8446, (August 2018)
[3] 3GPP TS 23.682 version 18.0.0, 3rd Generation Partnership Project; Technical Specification Group Services and System Aspects; Architecture enhancements to facilitate communications with packet data networks and applications (Release 18), March 2023.
[4] 3GPP TS 24.301 version 18.4.0, 3rd Generation Partnership Project; Technical Specification Group Core Network and Terminals; Non-Access-Stratum (NAS) protocol for Evolved Packet System (EPS); Stage 3 (Release 18), September 2023.
[5] R. Arul, et al. "A quantum-safe key hierarchy and dynamic security association for LTE/SAE in 5G scenario," IEEE Transactions on Industrial Informatics 16.1 (2019): 681-690.

### DESCRIPTION OF THE INVENTION

An object of the present invention is thus the provision of a loading and management mechanism of quantum-secure cryptographic keys within the HSS of a mobile communication network and one or more user equipment (UE), enabling secure key loading and synchronization across network elements. The invention is especially relevant to addressing advanced security and privacy challenges in satellite-based 5G, 6G NTNs and future standards.

To that end, the present invention proposes, according to one aspect, a NTN communication system for securely synchronizing quantum-secure cryptographic keys, comprising: a satellite comprising a SAT key operations module, the SAT key operations module comprising a SAT key manager configured to manage and provide quantum-secure cryptographic keys; a first connection adapter co-located with a HSS; and a CPE comprising a CPE key operations module, the CPE key operations module comprising a CPE key manager configured to manage and provide quantum-secure cryptographic keys, a second connection adapter, and at least one radio terminal.

In the proposed system, the first connection adapter is configured to send a key information request to the SAT key operations module, the key information request comprising a terminal identifier associated with the at least one radio terminal; receive quantum-secure cryptographic key information from the SAT key operations module, the key information comprising a quantum-secure cryptographic key and an key identifier associated with the key; load the quantum-secure cryptographic key into the HSS; and send the key identifier to the second connection adapter.

Likewise, the second connection adapter is configured to send a key information request based on the key identifier to the CPE key operations module; receive quantum-secure cryptographic key information from the CPE key operations module, the key information comprising the quantum-secure cryptographic key; and load the quantum-secure cryptographic key into the at least one radio terminal.

The present invention also proposes, according to another aspect, a method for securely synchronizing quantum-secure cryptographic keys in an NTN communication system. The method comprises: sending, by a first connection adapter, a key information request to a SAT key operations module onboard a satellite, the SAT key operations module comprising a SAT key manager configured to manage and provide quantum-secure cryptographic keys, and the key information request comprising a terminal identifier associated with at least one radio terminal disposed within a CPE; receiving, by the first connection adapter, from the SAT key manager, quantum-secure cryptographic key information comprising a quantum-secure cryptographic key and a key identifier associated with the key; loading, by the first connection adapter, the quantum-secure cryptographic key into a HSS; sending the key identifier from the first connection adapter to a second connection adapter located within the CPE; sending, by the second connection adapter, a key information request based on the key identifier to a CPE key operations module located within the CPE, the CPE key operations module comprising a CPE key manager configured to manage and provide cryptographic keys; receiving, by the second connection adapter, from the CPE key operations module, quantum-secure cryptographic key information comprising a quantum-secure cryptographic key; loading, by the second connection adapter, the quantum-secure cryptographic key into the at least one radio terminal.

In some embodiments, the first connection adapter and the HSS are disposed within a ground network and are configured to be operationally connected to the satellite. Alternatively, in other embodiments, they are disposed within the satellite.

In some embodiments, the quantum secure cryptographic key is a QKD key.

In some embodiments, the loading of the quantum-secure cryptographic key into the at least one radio terminal comprises applying a transformation operation to the quantum-secure cryptographic key to derive a master quantum-secure cryptographic key and replacing a pre-shared key of a Subscriber Identity Module (SIM) of the radio terminal by the master quantum-secure cryptographic key.

In some embodiments, the transformation operation comprises a truncation operation. In other embodiments, the transformation operation comprises computing a hash function of the pre-existing shared quantum-secure cryptographic key, dividing the hashed function into two segments of a given length, and combining the two segments using an XOR operation.

In some embodiments, the invention further comprises or uses an application programming interface (API) that enables the loading of quantum-secure cryptographic keys into the HSS or the at least one radio terminal.

Additionally, the API can also convert, using an API converter, cryptographic key information data into a format compatible with the HSS or the radio terminal, and transmit, from the first or second connection adapter, a quantum-secure cryptographic key query to the HSS or the radio terminal.

In some embodiments, the master quantum-secure cryptographic key, loaded in the HSS or in the SIM of the radio terminal, is utilized to derive a quantum-secure key hierarchy.

Therefore, the present invention proposes the design of network components, also referred as connection adapters, which enable the establishment of a trusted connection with a key management entity and facilitating the secure and efficient distribution of cryptographic keys within a QKD-based network architecture. The proposed connection adapters can support the loading of QKD-generated keys into the HSS and UEs, replacing pre-shared keys stored in a user's SIM card. This approach enhances network security through the use of quantum-secure cryptographic keys and enables key synchronization between satellite and ground-based network elements worldwide. Accordingly, the invention enables a novel key hierarchy architecture that ensures stronger data confidentiality and integrity, thereby strengthening 5G NTNs against quantum attacks.

As will become clear from the detailed description of the embodiments of the invention, the underlying concepts are applicable to any communication standard with similar components, including but not limited to 5G, 6G and future standards.

Some of the novel aspects of this solution include:
- A novel QKD-based NTN architecture that contemplates a flexible positioning of the HSS, either on the ground or within a satellite. The architecture utilizes a novel connection adapter to securely relay the quantum-secure keys to the HSS and/or radio terminal.
- Methods for replacing or integrating the pre-shared SIM-based key with a quantum-secure key at both the SIM within the radio terminal and the AuC within the HSS. This approach improves system adaptability and security, making it well-suited to address evolving requirements and emerging threats.
- A new mobile network security key hierarchy structure centered around the quantum-secure keys.
- Diverging from the traditional reliance on a singular, static key for each authentication process, this innovative method significantly enhances security through continuous key synchronization across the network. This approach ensures both forward and backward secrecy, strengthening the system's confidentiality and integrity against quantum adversaries.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Figs. 1a and 1b illustrate examples of a sequential QKD process implemented using satellites and Customer Premise Equipment (CPE), according to the prior art.
Fig. 2a is an example of a request-and-response mechanism between a SAE and a KME, according to the prior art. Fig. 2b illustrates the current 3GPP standard key hierarchy architecture.
Figs. 3a and 3b illustrate different embodiments of the proposed NTN communication system for securely synchronizing quantum-secure cryptographic keys.
Fig. 4 is a flow diagram illustrating an embodiment of the proposed method for securely synchronizing quantum-secure cryptographic keys.
Fig. 5 is a diagram illustrating an embodiment of the mutual authentication procedure between the connection adapters and the key managers in accordance with the present invention.
Fig. 6 shows a high-level architecture view of the connection adapters proposed by the present invention implementing an API design, according to an embodiment of the present invention.
Figs. 7a and 7b illustrate different methods for replacing a pre-shared SIM-based key with a QKD-generated key, according to different embodiments of the present invention.
Figs. 8a and 8b illustrate different methods for integrating a pre-shared SIM-based key with QKD-generated keys, according to different embodiments of the present invention.
Fig. 9 illustrates a novel key hierarchy for 5G security services according to the present invention, where a master key (MK) is derived by substituting a pre-shared key 'K' with a QKD-generated key.

### DETAILED DESCRIPTION OF THE INVENTION AND OF PREFERRED EMBODIMENTS

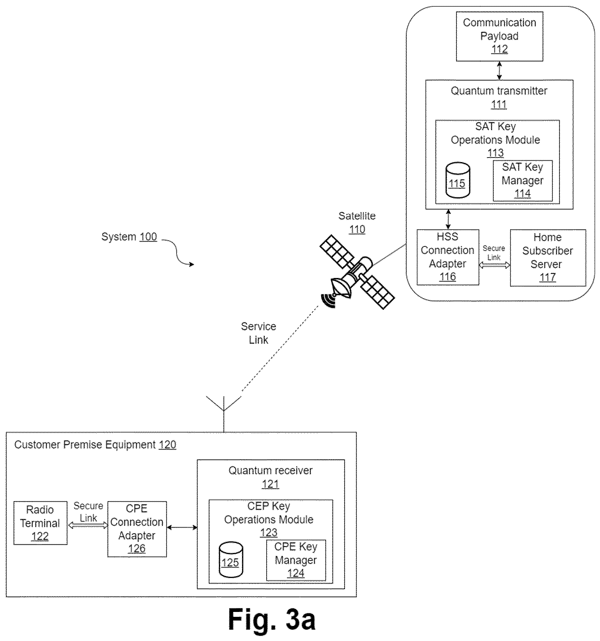

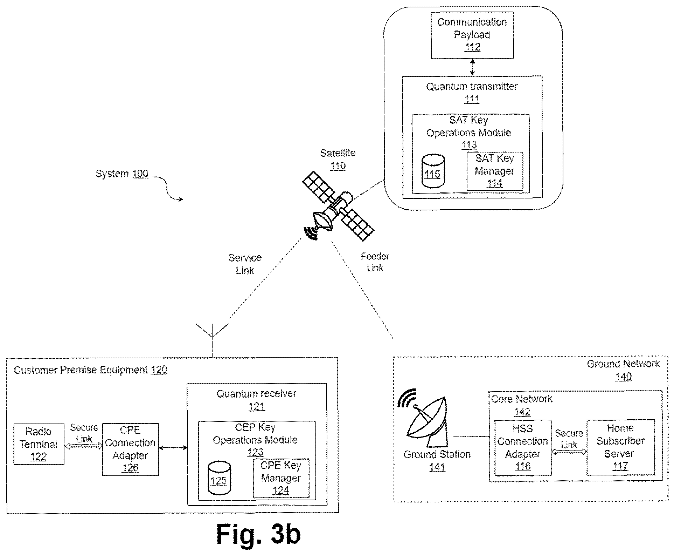

Figs. 3a and 3b illustrate two embodiments of the proposed system, both of which include a satellite 110 and a CPE 120. The satellite includes a quantum transmitter 111 and a communication payload 112, and the CPE 120 is equipped with a quantum receiver 121 and a radio terminal 122 (it could include more than one).

Particularly, the quantum transmitter 111 and quantum receiver 121 are QKD transmitter and receiver, respectively, and are configured to communicate via an optical link for the transmission of qubits between the satellite 110 and the CPE 120. Additionally, a radio link, also referred to as a service link, is established between the communication payload 112 and the radio terminal 122 within the CPE 120.

The design of a key distribution mechanism between the satellite 110 and the CPE 120 requires strategic consideration of the HSS 117 placement. As a critical component of the network, the HSS 117 serves as a centralized user database, storing cryptographic keys such as QKD keys associated with the radio terminal identity. In the proposed system, the HSS 117 may be positioned either within the satellite 110, thereby simplifying the system architecture as shown in Fig. 3a, or within a ground network 140, enabling enhanced service management and key synchronization, as illustrated in Fig. 3b. If the HSS 117 is positioned within the ground network 140, the communication payload 112 of the satellite 110 is configured to establish communication with the HSS 117 in the ground network 140 via a radio link, also referred to as a feeder link.

The communication payload 112 is configured to interact with a SAT Key Operations Module 113 integrated within the QKD transmitter, for example, via an onboard computer (OBC). The SAT Key Operations Module 113 includes a SAT Key Manager 114, which is responsible for managing cryptographic keys, and a data storage unit 115 configured to securely store the keys. The HSS 117 is configured to communicate with the SAT Key Operations Module 113 via an HSS connection adapter, or first connection adapter, 116. Similarly, the radio terminal 122 on the ground is configured to interface with the quantum receiver 121 through a CPE connection adapter, or second connection adapter, 126, which is co-located within the CPE 120.

The HSS and CPE connection adapters 116, 126 are configured to enable efficient and secure key distribution, for example, by executing high-level key delivery API procedures, including QKD key information requests, responses, and key loading operations. Particularly, they periodically transmit a QKD key information request to their corresponding key manager 114, 124 to verify the availability of cryptographic keys. Upon confirmation of key availability, each key manager transmits the QKD key information to their corresponding connection adapter 116, 126, which subsequently relays the key to the HSS 117 and radio terminal 122. This structured process ensures the seamless and secure synchronization of QKD-generated keys across the network, thereby enhancing the security of the system.

The HSS connection adapter 116 can be located either on the ground or onboard the satellite 110, depending on the placement of the HSS 117. It is advantageously positioned to maintain a secure and reliable connection with the HSS 117. Additionally, the CPE connection adapter 126 can establish and maintain a secure link with the radio terminal 122 within the QKD-CPE, ensuring the secure transmission of cryptographic keys information.

The key manager 114 embedded in the SAT key operations module 113 onboard the satellite 110 and the CPE key operations module 123 in the CPE 120 are configured to communicate with the HSS and CPE connection adapters 116, 126 to distribute the QKD keys to the HSS 117 and the radio terminal 122, respectively. The process begins with the radio terminal 122 connecting to the network through the legacy attach procedure. The attach procedure is crucial as it enables the connection adapter, located in either the communication payload 112 or the ground network 140, to securely identify the radio terminal/UE through its unique international mobile subscriber identity (IMSI). This identification is pivotal for the connection adapter to understand which radio terminal/UE is connected, ensuring secure and targeted communication.

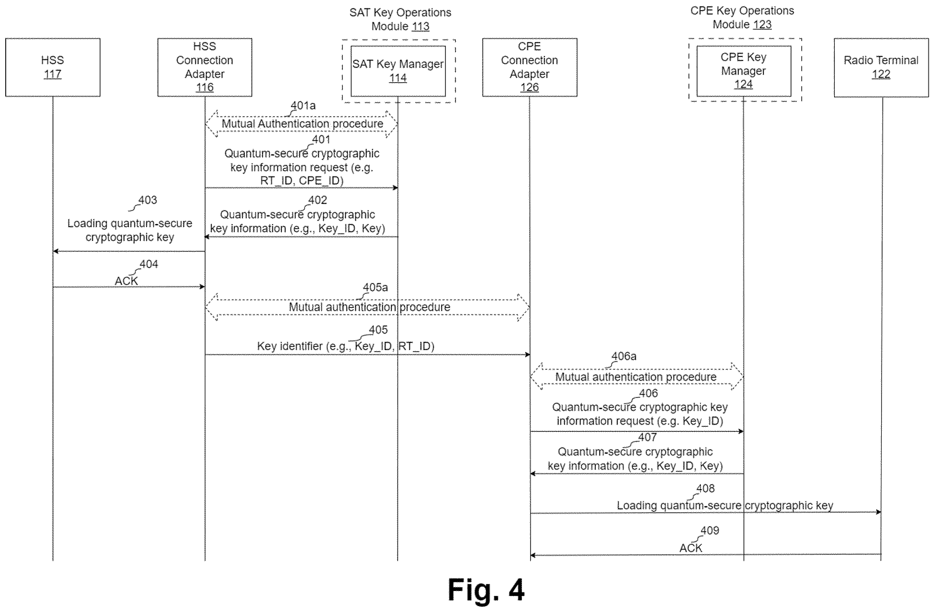

With regard to Fig. 4, this figure illustrates a flow diagram providing a high-level overview of an embodiment of the proposed method for secure key distribution between the components of the system. This process occurs after the attach procedure and the identification of the radio terminal 122 by the HSS connection adapter 116.

Before initiating communication between the HSS connection adapter 116 and the SAT key manager 114, a mutual authentication can be performed in step 401a to establish a secure connection between both entities. This secure connection can be implemented using HTTPS protocols, such as TLS version 1.3 or higher.

In an embodiment of the invention, the authentication process begins with the HSS connection adapter 116 verifying the key manager's certificate and associated ID. This verification step enhances security, as the HSS connection adapter 116 will proceed only if the key manager's credentials are authenticated. Simultaneously, the SAT key manager 114 validates the connection adapter's certificate and ID to confirm its authenticity. If any discrepancies or unverified IDs are detected, the SAT key manager 114 rejects the connection request. Upon successful mutual authentication, both parties are validated, and the HSS connection adapter 116 is authorized to send requests (e.g., API methods) to the SAT key manager 114. This process ensures the security and integrity of the connection, allowing only authenticated entities to access and utilize the API within the QKD-CPE and QKD-SAT frameworks.

In step 401, the HSS connection adapter 116 sends a quantum-secure cryptographic key information request to the SAT Key Manager 114 within the SAT key operations module 113, where the information request may contain at least one of a radio terminal ID (RT_ID), such as an IMSI, or a Customer Premise Equipment ID (CPE_ID), in order to identify the user requesting the key.

In response, in step 402, the SAT key manager 114 within the SAT key operations module 113 selects a key associated with the user, if available, from the data storage 115. The SAT key manager 114 then returns key information, comprising at least an identifier (key ID) and the corresponding key, back to the HSS connection adapter 116.

The HSS connection adapter 116 can efficiently load and store QKD keys within the HSS's AuC using API connectivity. In step 403, the HSS connection adapter 116 can load the quantum-secure cryptographic key into the HHS 117, for example, by translating API requests into data base queries or any other suitable format. Upon successful loading, in step 404, the HSS 117 sends an acknowledgement to the HSS connection adapter 116 that the key is successfully loaded.

In step 405, the HSS connection adapter 116 forwards the key ID to the CPE connection adapter 126. In a preferred embodiment, before transmitting the key ID, a step 405a can be performed to establish mutual authentication between the HSS connection adapter 116 and the CPE connection adapter 126, following a process similar to the authentication between the HSS connection adapter 116 and the SAT key manager 114. Upon successful authentication, the key ID is securely transmitted to the CPE connection adapter 126, ensuring both secure and authenticated communication.

In step 406, the CPE connection adapter 126 initiates a request for quantum-secure cryptographic key information by sending a message to the CPE key manager 124 within the CPE key operations module 123. This request comprises the key ID previously received from the HSS connection adapter 116. Alternatively, the request may further include additional system parameters, such as a connection adapter ID, among others. Similarly to the interaction between the HSS connection adapter 116 and the SAT key manager 114, a prior step 406a of mutual authentication can enhance security and integrity of the connection between the CPE connection adapter 126 and the CPE key manager 124.

In step 407, the CPE key manager 124 try to locate the relevant QKD key using the provided key ID. If a key comprising the requested key ID can be found, the CPE key manager 124 returns to the CPE connection adapter 126 key information comprising the requested key. Alternatively, the key information may also comprise the requested key ID, for confirmation, or other system parameters. If a key comprising the requested key ID cannot be found, the CPE key manager 124 returns a flag indicating that the key was not found by the CPE key manager 124 in the data storage 125, for example, via an HTTP 400-error response.

In step 408, the CPE connection adapter 126 can load the quantum-secure cryptographic key into the radio terminal 122, for example, by translating API requests into a suitable format. Upon successful loading, in step 409, the radio terminal 122 sends an acknowledgement to the CPE connection adapter 126 that the key is successfully loaded.

Upon completion of the key distribution lifecycle, both network infrastructure and user equipment have identical QKD keys and corresponding key IDs. These keys are securely integrated into the HSS 117 and the radio terminal 122, ensuring that the QKD key associated with each IMSI is consistently loaded across the network, ensuring a synchronized security setup.

The sequence of steps described herein is provided by way of example, and modifications to the order of execution may be implemented without departing from the principles of the invention. For instance, in an alternative embodiment, the HSS connection adapter 116 may defer loading the key into the HSS until an acknowledgment is received confirming that the key has been fully loaded in the radio terminal, thereby ensuring system synchronization.

In another alternative embodiment, the method for secure key distribution may be initiated by the radio terminal 122. In this case, while the steps remain the same, the process begins on the ground at the CPE Key Manager 124.

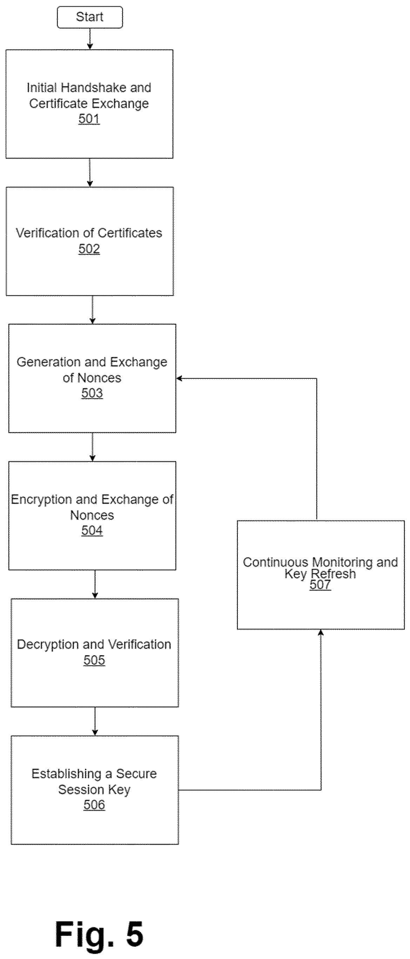

With regard to Fig. 5, this figure illustrates an embodiment of the mutual authentication method performed between the HSS and CPE connection adapters 116, 126 and the SAT and CPE key managers 114, 124. This procedure may also be applied to the mutual authentication process between the HSS and CPE connection adapters 116, 126. The method comprises an Initial Handshake and Certificate Exchange (step 501), in which the HSS and CPE connection adapters 116, 126 initiate a connection with the SAT and CPE key managers 114, 124 using, for example, TLS version 1.3 or higher. Both elements exchange their certificates during the TLS handshake, which contain public information signed by a trusted certificate authority (CA) to ensure authenticity.

Then, at step 502, upon receiving the certificate, each element verifies its authenticity by checking the signature against the CA's public key, ensuring the certificates are not tampered and are issued by a trusted CA. In step 503, the connection adapter 116, 126 and key manager 114, 124 each generate a unique, random number, and each element sends its nonce to the other for further verification. Following, in step 504, each element encrypts the received nonce using its private key and the other party's public key (derived from the certificate). The encrypted nonces are then exchanged securely.

Upon receiving the encrypted nonce, in step 505, each element decrypts it using its private key and the sender's public key. If the decrypted nonce matches the original, it confirms the sender is in possession of the corresponding private key, establishing legitimacy.

In step 506, a secure session key is established. The successful nonce exchange is used to generate a symmetric session key, which encrypts subsequent communications, ensuring data remains secure. Finally, the session key is refreshed at regular intervals (step 507), with the nonce exchange process repeated to maintain security.

In an alternative embodiment, the mutual authentication process may use a post-quantum cryptographic (PQC) algorithm to enhance the security of the communication channel against quantum attacks. For example, a lattice-based cryptographic algorithm, such as Module-Lattice-Based Key-Encapsulation Mechanism (ML-KEM) may be applied to encrypt session keys, ensuring resilience against quantum adversaries.

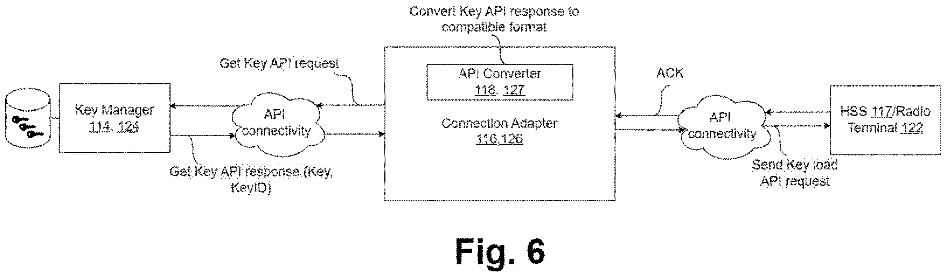

In some embodiments, the present invention includes an API to facilitate the loading of quantum-secure cryptographic keys into the HSS 117 or the radio terminal 122. Fig. 6 shows a high-level architecture view of the HSS and CPE connection adapters 116, 126 proposed by the present invention implementing the API design to perform two key functions. First, an API converter 118, 127 converts cryptographic key information into a format compatible with the HSS database or the radio terminal SIM, ensuring seamless loading of the keys. Secondly, the API enables the transmission of quantum-secure cryptographic key information from the HSS and CPE connection adapters 116, 126 to the HSS 117 or the radio terminal 122. This transmission occurs in accordance with the previously described key distribution and authentication procedures, ensuring secure and efficient key synchronization within the system.

As used herein, the term "SIM" refers to any subscriber identity module, including but not limited to USIM, eSIM, iSIM, or any other equivalent implementation, without limiting the scope of the invention to a specific technology or implementation.

A high-level API design for an exemplary implementation of a connection adapter that implements the novel key distribution method proposed by the present invention can be outlined as follows:
1. Data Retrieval: Each connection adapter 116, 126 performs a "Get Key API request" to retrieve QKD key information from the correspondent key manager 114, 124. The key manager provides this information in a "Get Key API response", for example, in a HTTP-based JSON format, containing the QKD key and key ID.
2. Data Parsing: The HSS and CPE connection adapters 116, 126 extract the QKD key and key ID from the Get Key API response by parsing the JSON data. Through this process the HSS and CPE connection adapters interpret the JSON structure to identify and isolate each required piece of information.
3. Conversion to Compatible Format: The HSS and CPE connection adapters 116, 126 convert the parsed data into a format compatible with the HSS 117 or the radio terminal 122. The HSS 117 can support various data interfacing methods, including file-based imports (e.g., CSV, XML, SQL), direct database access using compatible queries, dedicated REST or SOAP APIs for dynamic key updates., and DIAMETER-based interfaces (e.g., S6a, S6d, Sh) to enable real-time data exchange with network elements. For the radio terminal's SIM card, data can be provisioned using file-based formats (CSV, JSON, XML), Application Protocol Data Unit (APDU) commands, Remote SIM Provisioning (RSP) protocols, or other proprietary and standardized protocols, as well as through direct physical memory access when applicable. The choice of method depends on factors such as deployment scale, automation requirements, and network architecture.
4. Data Validation: Before transmitting data to the HSS 117 or radio terminal 122, the HSS and CPE connection adapters 116, 126 validate if the converted data format complies with the requirements, ensuring that the information is accurate, complete, and properly structured.
5. API Communication: The HSS and CPE connection adapters 116, 126 use their respective API connectivity to communicate with key managers 114, 124, HSS 117 and radio terminal 122. They send the Key Load API request data securely over the network, ensuring the integrity and confidentiality of the QKD key information.
6. Data Loading: Upon receiving the key information in the compatible format, the HSS 117 and radio terminal 122 execute case-specific logic to update their registries with the new QKD key information, integrating the QKD key information into the existing data structures.
7. Confirmation & Logging: Once the databases are updated, a confirmation is sent to the HSS and CPE connection adapters 116, 126. The HSS and CPE connection adapters 116, 126 log this confirmation to ensure the key has been successfully integrated into the HSS 117 and radio terminal 122.
8. Error Handling: If errors occur, such as data format mismatches or communication issues, error handling mechanisms will be placed. This may include retry mechanisms, error logging, and alerting relevant personnel to investigate and resolve the issue.

In this process, each connection adapter 116, 126 plays a crucial role in accurately parsing, converting, validating, and securely transmitting QKD key information, ensuring the successful integration of QKD keys into the relevant targeted component. Once the QKD keys are loaded into the radio terminal 122 and the HSS 117, they replace the pre-existing shared key 'K' in the SIM and AuC.

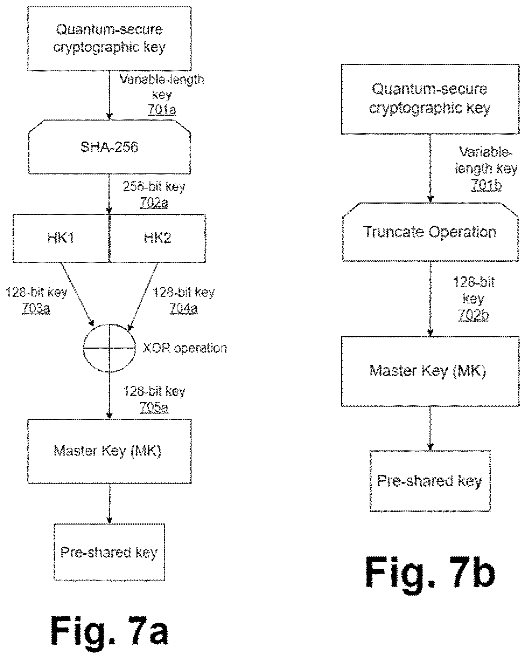

Various methods can be employed to replace the pre-shared SIM-based key with a QKD-generated key, considering that the exact length of the QKD key may vary due to QKD post-processing. In some embodiments, XOR or truncation operations are utilized for substituting the SIM-based key. Fig. 7a illustrates an example of the proposed XOR operation method, which involves the following steps. A QKD key of variable length 701a is processed using the SHA-256 hash function, generating a 256-bit output 702a. This output is then divided into two 128-bit segments, referred to as HK1 703a and HK2 704a, which represent hash keys. Finally, an XOR operation is performed to combine HK1 and HK2, resulting in a 128-bit master key, MK 705a. Alternatively, Fig. 6b shows an example of the proposed truncate method where the QKD key of any variable length 701b undergoes the truncate operation and produces the 128-bit key master key, MK 702b. This substitution results in a strengthened master key, with enhanced security derived from the unique and quantum-secure origin of the QKD key.

Particularly, the XOR operation method processes the QKD key using the Secure Hash Algorithm 256 (SHA-256) and standardizes the output to a 128-bit length. While other methods and key lengths may be employed, this approach ensures compatibility with existing 5G infrastructures, enabling integration of QKD-enhanced security services into existing networks. The substitution eliminates the dependency of existing networks on the conventional SIM-based key ('K'), providing an enhanced security mechanism that remains effective even in scenarios where the pre-shared key ('K') may be compromised.

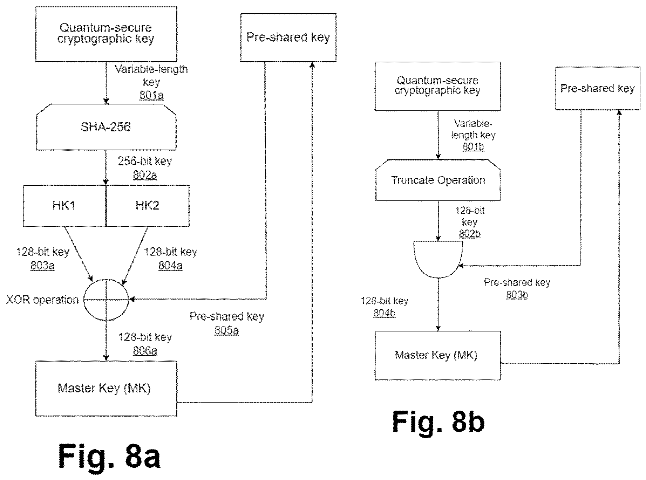

In an alternative embodiment, rather than replacing the pre-shared SIM-based key ('K'), it may be integrated with QKD-generated keys to enhance the security of the network. Similar operational methods can be applied for integrating the SIM-based key with the QKD key. Fig. 8a illustrates the XOR operation where an additional XOR operation is used to combine the two 128-bit segments (HK1, HK2) with the pre-shared key, and generate a MK. Similarly, Fig. 8b illustrates the adaptation to the truncate operation where an AND operation is used to combine the truncated 128-bit key with the pre-shared key to generate a MK.

In the procedures illustrated in Fig. 8a and Fig. 8b, once a master key is loaded in place of the original pre-shared key, it can be integrated with the next master key generated from a new quantum key, enabling dynamic key integration.

The integration of QKD with the traditional SIM-based key offers dual security advantages by combining two inherently secure sources, significantly enhancing protection compared to systems relying on a single key. For example, if the SIM-based key ('K') is compromised, the system's security remains intact as the QKD key can independently provide quantum-resistant protection. Alternatively, if the QKD key is compromised, the system continues to support standard 5G security services. Moreover, a compromised QKD key becomes invalid for future authentication processes, preventing its misuse and preserving the overall security integrity of the network.

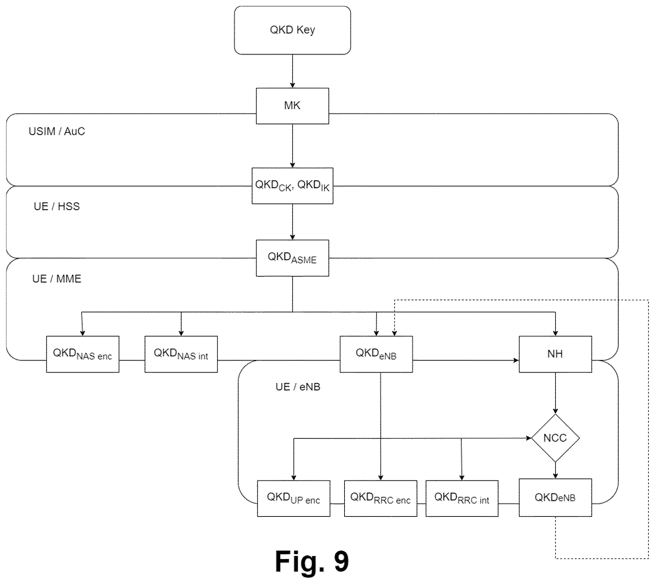

Fig. 9 illustrates another embodiment of the present invention. In this case, a key hierarchy for 5G security services is proposed, where a master key (MK) is derived by substituting the pre-shared key 'K' with a QKD-generated key. Enabling the generation of subsequent security keys, for example, the Network Access Security (NAS) and Access Security (AS) keys. While this key hierarchy aligns with the standard 3GPP key hierarchy used in current 5G systems, it effectively addresses the limitations associated with static, singular keys in traditional architectures. By replacing the primary key 'K' with the QKD key, the system establishes a dynamic foundation for secure communications, ensuring that a unique key is generated for each authentication session between the UE and the 3GPP network elements.

Although particular embodiments of the present invention have been described above in detail, it will be understood that this description is merely for purposes of illustration and the above description of the invention is not exhaustive. Specific features of the invention are shown in some drawings and not in others, and this is for convenience only, and any feature may be combined with another in accordance with the invention. A number of variations and alternatives will be apparent to one having ordinary skills in the art. Such alternatives and variations are intended to be included within the scope of the claims.

Particular features that are presented in dependent claims can be combined and fall within the scope of the invention. The invention also encompasses embodiments as if dependent claims were alternatively written in a multiple dependent claim format with reference to other independent claims.

The scope of the present invention is defined in the following set of claims.

## Claims

1. A non-terrestrial communication system for securely synchronizing quantum-secure cryptographic keys, comprising:
a satellite (110) comprising a SAT key operations module (113), the SAT key operations module (113) comprising a SAT key manager (114) configured to manage and provide quantum-secure cryptographic keys;
a first connection adapter (116) co-located with a Home Subscriber Server, HSS (117);
a Customer Premises Equipment, CPE (120), comprising:
a CPE key operations module (123), the CPE key operations module (123) comprising a CPE key manager (124) configured to manage and provide quantum-secure cryptographic keys,
a second connection adapter (126), and
at least one radio terminal (122);
the first connection adapter (116) being configured to:
send a key information request to the SAT key operations module (113), the key information request comprising a terminal identifier associated with the at least one radio terminal (122);
receive quantum-secure cryptographic key information from the SAT key operations module (113), the key information comprising a quantum-secure cryptographic key and a key identifier associated with the key;
load the quantum-secure cryptographic key into the HSS (117); and
send the key identifier to the second connection adapter (126); and
the second connection adapter (126) being configured to:
send a key information request based on the key identifier to the CPE key operations module (123);
receive quantum-secure cryptographic key information from the CPE key operations module (123), the key information comprising the quantum-secure cryptographic key; and
load the quantum-secure cryptographic key into the at least one radio terminal (122).

2. The system of claim 1, wherein the first connection adapter (116) and the HSS (117) are disposed within a ground network (140) and are configured to be operationally connected to the satellite (110).

3. The system of claim 1, wherein the first connection adapter (116) and the HSS (117) are disposed within the satellite (110).

4. The system of any one of claims 1 to 3, wherein the quantum secure cryptographic key is a Quantum Key Distribution, QKD, key.

5. The system of any one of claims 1 to 4, wherein the loading of the quantum-secure cryptographic key into the at least one radio terminal (122) comprises:
applying a transformation operation to the quantum-secure cryptographic key to derive a master quantum-secure cryptographic key; and
replacing a pre-shared key of a Subscriber Identity Module, SIM, of the radio terminal (122) by the master quantum-secure cryptographic key.

6. The system of claim 5, wherein the transformation operation comprises:
a truncation operation; or
computing a hash function of the pre-existing shared quantum-secure cryptographic key, dividing the hashed function into two segments of a given length, and combining the two segments using an XOR operation.

7. The system of any one of claims 1 to 6, further comprising an application programming interface, API, configured to enable the loading of quantum-secure cryptographic keys into the HSS (117) or the at least one radio terminal (122), the API being further configured to:
convert, by an API converter (118, 127), cryptographic key information data into a format compatible with the HSS (117) or the radio terminal (122); and
transmit, from the first or second connection adapter (116, 126), a quantum-secure cryptographic key query to the HSS (117) or the radio terminal (122).

8. A method for securely synchronizing quantum-secure cryptographic keys in a non-terrestrial mobile communication system, the method comprising:
sending (401), by a first connection adapter (116), a key information request to a SAT key operations module (113) onboard a satellite (110), the SAT key operations module (113) comprising a SAT key manager (114) configured to manage and provide quantum-secure cryptographic keys, and the key information request comprising a terminal identifier associated with at least one radio terminal (122) disposed within a Customer Premise Equipment, CPE (120);
receiving (402), by the first connection adapter (116), from the SAT key manager (114), quantum-secure cryptographic key information comprising a quantum-secure cryptographic key and a key identifier associated with the key;
loading (403), by the first connection adapter (116), the quantum-secure cryptographic key into a Home Subscriber Server, HSS (117);
sending (405) the key identifier from the first connection adapter (116) to a second connection adapter (126) located within the CPE (120);
sending (406), by the second connection adapter (126), a key information request based on the key identifier to a CPE key operations module (123) located within the CPE (120), the CPE key operations module (123) comprising a CPE key manager (124) configured to manage and provide cryptographic keys;
receiving (407), by the second connection adapter (126), from the CPE key operations module (123), quantum-secure cryptographic key information comprising a quantum-secure cryptographic key;
loading (408), by the second connection adapter (126), the quantum-secure cryptographic key into the at least one radio terminal (122).

9. The method of claim 8, wherein the first connection adapter (116) and the HSS (117) are disposed within a ground network (140) and are configured to be operationally connected to the satellite (110).

10. The method of claim 9, wherein the first connection adapter (116) and the HSS (117) are disposed within the satellite (110).

11. The method of any one of claims 8 to 10, wherein the quantum secure cryptographic key is a Quantum Key Distribution, QKD, key.

12. The method of any one of claims 8 to 11, wherein the loading (408) of the quantum-secure cryptographic key into the radio terminal (122) comprises:
applying a transformation operation to the quantum-secure cryptographic key to derive a master quantum-secure cryptographic key; and
replacing a pre-shared key of a Subscriber Identity Module, SIM, of the radio terminal (122) by the master quantum-secure cryptographic key.

13. The method of claim 12, wherein the transformation operation comprises:
a truncation operation; or
computing a hash function of the pre-existing shared quantum-secure cryptographic key, dividing the hashed function into two segments of a given length, and combining the two segments using an XOR operation.

14. The method of any one of claims 8 to 13, wherein the loading of quantum-secure cryptographic keys into the HSS (117) or the at least one radio terminal (122) is enabled by an application programming interface, API, the latter comprising:
converting, by an API converter (118, 127), cryptographic key information data into a format compatible with the HSS (117) or the radio terminal (122); and
transmitting, from the first or second connection adapter (116, 126), a quantum-secure cryptographic key query to the HSS (117) or the radio terminal (122).

15. The method of any one of claims 12 to 14, wherein the master quantum-secure cryptographic key, loaded in the HSS (117) or in the SIM of the radio terminal (122), is utilized to derive a quantum-secure key hierarchy.
